# EUROPEAN PATENT SPECIFICATION

(11) **EP 3 934 210 B1**
(45) Date of publication and mention of the grant of the patent: **02.08.2023**
(21) Application number: 21191683.8
(22) Date of filing: 28.04.2017
(51) Int. Cl.: H04W 4/70, H04L 67/51, H04W 8/00, H04W 8/12, H04W 76/14

(54) **METHOD AND APPARATUSES FOR IDENTIFYING MOBILE TO MOBILE APPLICATIONS**
IDENTIFIZIERUNG UND/ODER PROFILERSTELLUNG VON STATIONÄREN BENUTZERN UND MOBILEN BENUTZERN
VERFAHREN UND GERÄTE ZUR IDENTIFIZIERUNG VON MOBILE-TO-MOBIL-ANWENDUNGEN

(30) Priority: 25.05.2016 US 201615164570
(43) Date of publication of application: 05.01.2022
(62) Divisional of application: 17723580.1
(73) Proprietor: QUALCOMM INCORPORATED, San Diego, California 92121-1714 (US)
(72) Inventor: IYER, Ashish, San Diego, CA, 92121-1714 (US); SANTHANAM, Arvind, San Diego, CA, 92121-1714 (US); BALASUBRAMANIAN, Srinivasan, San Diego, CA, 92121-1714 (US); RAJAGOPALAN, Srinivasan, San Diego, CA, 92121-1714 (US)
(74) Representative: Bardehle Pagenberg Partnerschaft mbB Patentanwälte Rechtsanwälte

(56) References cited:
- US-A1- 2004 087 274
- US-A1- 2014 206 322
- US-A1- 2015 142 986

## Description

### BACKGROUND

### Field

The present disclosure relates generally to communication systems, and more particularly, to identifying and/or profiling stationary user equipments (UEs) and mobile UEs, and to providing discovery filters.

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is Long Term Evolution (LTE). LTE is a set of enhancements to the Universal Mobile Telecommunications System (UMTS) mobile standard promulgated by Third Generation Partnership Project (3GPP). LTE is designed to support mobile broadband access through improved spectral efficiency, lowered costs, and improved services using OFDMA on the downlink, SC-FDMA on the uplink, and multiple-input multiple-output (MIMO) antenna technology. However, as the demand for mobile broadband access continues to increase, there exists a need for further improvements in LTE technology. These improvements may also be applicable to other multi-access technologies and the telecommunication standards that employ these technologies.

Long term evolution direct (LTE-D) may provide proximity services (ProSe) that allows device-to-device technology. Device-to-device technology may enable a UE to detect another device (e.g., stationary UE and/or mobile UE) directly. Advertisements may be transmitted and/or broadcast by stationary UEs (e.g., businesses and/or retail outlets) that are directly received by a mobile UE. However, the mobile UE may not be aware of all of the stationary UEs within the mobile UE's vicinity. Therefore, the mobile UE may not be able to discover and/or decode all advertisements being broadcast.

US 2014/206322 A1 discloses systems and methods for network-assisted device discovery for device-to-device (D2D) communications. In one embodiment, a base station in a cellular communications network receives a D2D request from a first wireless device to establish D2D communication. In response to the D2D request, the base station selects a second wireless device for D2D communication with the first wireless device based on the D2D request and information regarding wireless devices that are available for D2D communication. The base station then transmits a D2D request acknowledgment to the first wireless device that includes information that enables the first wireless device to establish D2D communication with the second wireless device. The base station also effects transmission of a D2D reconfiguration message to the second wireless device, where the D2D reconfiguration message includes information that informs the second wireless device that the first wireless device has requested establishment of D2D communication.

### SUMMARY

The invention is defined in the independent claims. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

LTE-D may provide ProSe that allows device-to-device technology. Device-to-device technology may enable a UE to detect another device (e.g., stationary UE and/or mobile UE) directly. Advertisements may be transmitted and/or broadcast by stationary UEs (e.g., businesses and/or retail outlets) that are directly received by a mobile UE. However, the mobile UE may not be aware of all of the stationary UEs within its vicinity. Therefore, the mobile UE may not be able to discover and/or decode all advertisements being broadcast.

In order to provide a solution to this problem, the present disclosure enables an evolved Node B (eNB) to identify and/or profile stationary UEs verses mobile UEs located within its cell. In addition, the eNB may tailor a discovery filter that includes all of the ProSe Application Codes (PACs) (e.g., advertisements) being transmitted by stationary UEs within a vicinity of the cell. The discovery filter may be shared with a network server such that a mobile UE requesting information associated with a particular PAC will receive a list of all PACs within the vicinity of the mobile UE.

In an aspect of the disclosure, a method, a computer-readable medium, and an apparatus are provided. The apparatus monitors transmissions from a plurality of UEs over a period of time. The apparatus determines at least one stationary UE in the plurality of UEs based on one or more features associated with the transmissions.

In another aspect, the apparatus receives, from a base station, a list of one or more device-to-device applications transmitted by at least one stationary UE. The apparatus also receives from a mobile UE, a discovery request associated with at least one device-to-device application. The apparatus further transmits to the mobile UE, a discovery response that includes first information associated with the at least one device-to-device application and second information associated with at least one different device-to-device application.

In a further aspect, the apparatus requests information associated with at least one first device-to-device application. The apparatus also receives first information associated with the at least one first device-to-device application and second information associated with at least second one device-to-device application. In an aspect, the second information may be received without sending a request.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIGs. 2A, 2B, 2C, and 2D are diagrams illustrating LTE examples of a DL frame structure, DL channels within the DL frame structure, an UL frame structure, and UL channels within the UL frame structure, respectively.
FIG. 3 is a diagram illustrating an example of eNB and UE in an access network.
FIG. 4 is a diagram of a device-to-device communications system in accordance with one aspect of the present disclosure.
FIG. 5 is a diagram of a device-to-device communications system in accordance with one aspect of the present disclosure
FIG. 6 is a diagram of a device-to-device communications system in accordance with one aspect of the present disclosure
FIGs. 7A and 7B are a diagram of a data flow for receiving a discovery filter including a list of PACs in accordance with one aspect of the disclosure.
FIGs. 8A and 8B are a diagram of a data flow for receiving a discovery filter including a list of PACs in accordance with one aspect of the disclosure.
FIGs. 9A and 9B are a flowchart of a method of wireless communication.
FIG. 10 is a conceptual data flow diagram illustrating the data flow between different means/components in an exemplary apparatus.
FIG. 11 is a diagram illustrating an example of a hardware implementation for an apparatus employing a processing system.
FIG. 12 is a flowchart of a method of wireless communication.
FIG. 13 is a conceptual data flow diagram illustrating the data flow between different means/components in an exemplary apparatus.
FIG. 14 is a diagram illustrating an example of a hardware implementation for an apparatus employing a processing system.
FIG. 15 is a flowchart of a method of wireless communication.
FIG. 16 is a conceptual data flow diagram illustrating the data flow between different means/components in an exemplary apparatus.
FIG. 17 is a diagram illustrating an example of a hardware implementation for an apparatus employing a processing system

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

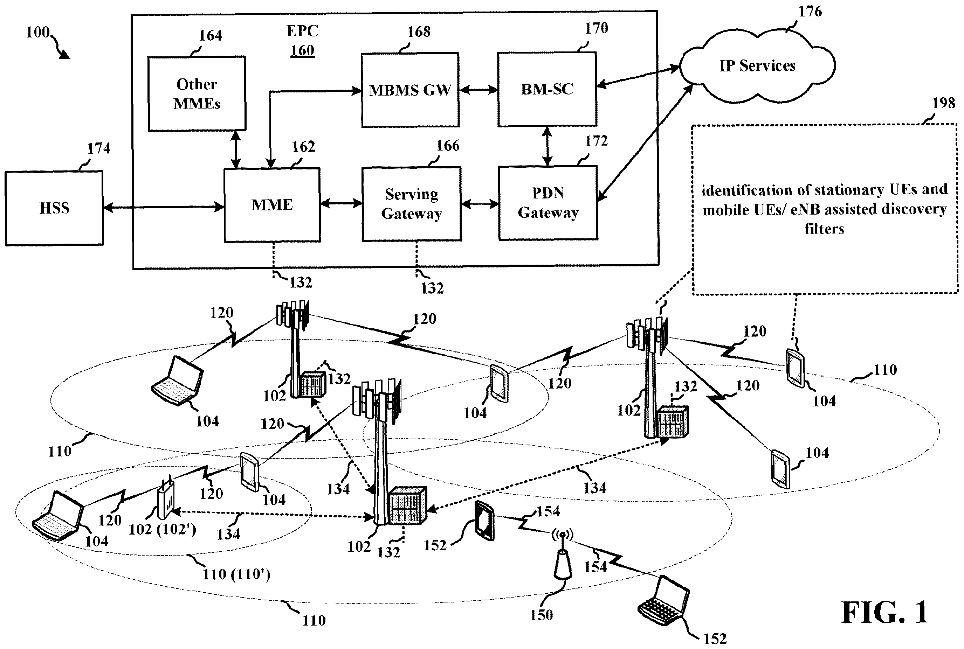

FIG. 1 is a diagram illustrating an example of a wireless communications system and an access network 100. The wireless communications system (also referred to as a wireless wide area network (WWAN)) includes base stations 102, UEs 104, and an Evolved Packet Core (EPC) 160. The base stations 102 may include macro cells (high power cellular base station) and/or small cells (low power cellular base station). The macro cells include eNBs. The small cells include femtocells, picocells, and microcells.

The base stations 102 (collectively referred to as Evolved Universal Mobile Telecommunications System (UMTS) Terrestrial Radio Access Network (E-UTRAN)) interface with the EPC 160 through backhaul links 132 (e.g., S1 interface). In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macro cells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20 MHz) bandwidth per carrier allocated in a carrier aggregation of up to a total of Yx MHz (x component carriers) used for transmission in each direction. The carriers may or may not be adjacent to each other. Allocation of carriers may be asymmetric with respect to DL and UL (e.g., more or less carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ LTE and use the same 5 GHz unlicensed frequency spectrum as used by the Wi-Fi AP 150. The small cell 102', employing LTE in an unlicensed frequency spectrum, may boost coverage to and/or increase capacity of the access network. LTE in an unlicensed spectrum may be referred to as LTE-unlicensed (LTE-U), licensed assisted access (LAA), or MuLTEfire.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service (PSS), and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (NMSFN) area broadcasting a particular service, and may be responsible for session management (start/stop) and for collecting eMBMS related charging information.

The base station may also be referred to as a Node B, evolved Node B (eNB), an access point, a base transceiver station, a radio base station, a radio transceiver, a transceiver function, a basic service set (BSS), an extended service set (ESS), or some other suitable terminology. The base station 102 provides an access point to the EPC 160 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, or any other similar functioning device. The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Referring again to FIG. 1, in certain aspects, the eNB 102 may be configured to identify and/or profile stationary UEs and mobile UEs, and to provide discovery filters 198.

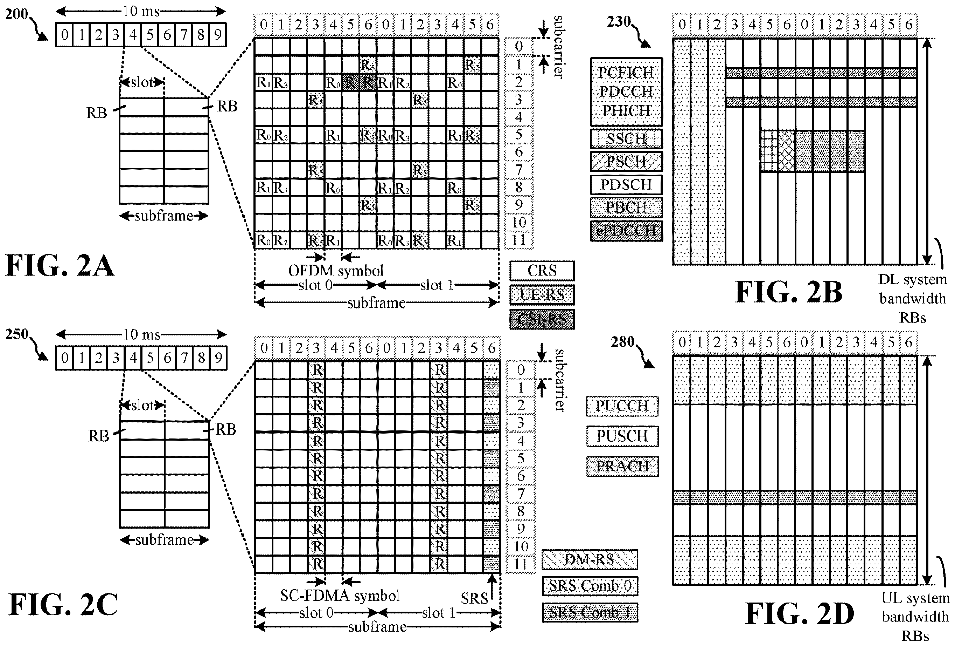

FIG. 2A is a diagram 200 illustrating an example of a DL frame structure in LTE. FIG. 2B is a diagram 230 illustrating an example of channels within the DL frame structure in LTE. FIG. 2C is a diagram 250 illustrating an example of an UL frame structure in LTE. FIG. 2D is a diagram 280 illustrating an example of channels within the UL frame structure in LTE. Other wireless communication technologies may have a different frame structure and/or different channels. In LTE, a frame (10 ms) may be divided into 10 equally sized subframes. Each subframe may include two consecutive time slots. A resource grid may be used to represent the two time slots, each time slot including one or more time concurrent resource blocks (RBs) (also referred to as physical RBs (PRBs)). The resource grid is divided into multiple resource elements (REs). In LTE, for a normal cyclic prefix, an RB contains 12 consecutive subcarriers in the frequency domain and 7 consecutive symbols (for DL, OFDM symbols; for UL, SC-FDMA symbols) in the time domain, for a total of 84 REs. For an extended cyclic prefix, an RB contains 12 consecutive subcarriers in the frequency domain and 6 consecutive symbols in the time domain, for a total of 72 REs. The number of bits carried by each RE depends on the modulation scheme.

As illustrated in FIG. 2A, some of the REs carry DL reference (pilot) signals (DL-RS) for channel estimation at the UE. The DL-RS may include cell-specific reference signals (CRS) (also sometimes called common RS), UE-specific reference signals (UE-RS), and channel state information reference signals (CSI-RS). FIG. 2A illustrates CRS for antenna ports 0, 1, 2, and 3 (indicated as R₀, R₁, R₂, and R₃, respectively), UE-RS for antenna port 5 (indicated as R₅), and CSI-RS for antenna port 15 (indicated as R). FIG. 2B illustrates an example of various channels within a DL subframe of a frame. The physical control format indicator channel (PCFICH) is within symbol 0 of slot 0, and carries a control format indicator (CFI) that indicates whether the physical downlink control channel (PDCCH) occupies 1, 2, or 3 symbols (FIG. 2B illustrates a PDCCH that occupies 3 symbols). The PDCCH carries downlink control information (DCI) within one or more control channel elements (CCEs), each CCE including nine RE groups (REGs), each REG including four consecutive REs in an OFDM symbol. A UE may be configured with a UE-specific enhanced PDCCH (ePDCCH) that also carries DCI. The ePDCCH may have 2, 4, or 8 RB pairs (FIG. 2B shows two RB pairs, each subset including one RB pair). The physical hybrid automatic repeat request (ARQ) (HARQ) indicator channel (PHICH) is also within symbol 0 of slot 0 and carries the HARQ indicator (HI) that indicates HARQ acknowledgement (ACK) / negative ACK (NACK) feedback based on the physical uplink shared channel (PUSCH). The primary synchronization channel (PSCH) is within symbol 6 of slot 0 within subframes 0 and 5 of a frame, and carries a primary synchronization signal (PSS) that is used by a UE to determine subframe timing and a physical layer identity. The secondary synchronization channel (SSCH) is within symbol 5 of slot 0 within subframes 0 and 5 of a frame, and carries a secondary synchronization signal (SSS) that is used by a UE to determine a physical layer cell identity group number. Based on the physical layer identity and the physical layer cell identity group number, the UE can determine a physical cell identifier (PCI). Based on the PCI, the UE can determine the locations of the aforementioned DL-RS. The physical broadcast channel (PBCH) is within symbols 0, 1, 2, 3 of slot 1 of subframe 0 of a frame, and carries a master information block (MIB). The MIB provides a number of RBs in the DL system bandwidth, a PHICH configuration, and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry demodulation reference signals (DM-RS) for channel estimation at the eNB. The UE may additionally transmit sounding reference signals (SRS) in the last symbol of a subframe. The SRS may have a comb structure, and a UE may transmit SRS on one of the combs. The SRS may be used by an eNB for channel quality estimation to enable frequency-dependent scheduling on the UL. FIG. 2D illustrates an example of various channels within an UL subframe of a frame. A physical random access channel (PRACH) may be within one or more subframes within a frame based on the PRACH configuration. The PRACH may include six consecutive RB pairs within a subframe. The PRACH allows the UE to perform initial system access and achieve UL synchronization. A physical uplink control channel (PUCCH) may be located on edges of the UL system bandwidth. The PUCCH carries uplink control information (UCI), such as scheduling requests, a channel quality indicator (CQI), a precoding matrix indicator (PMI), a rank indicator (RI), and HARQ ACK/NACK feedback. The PUSCH carries data, and may additionally be used to carry a buffer status report (BSR), a power headroom report (PHR), and/or UCI.

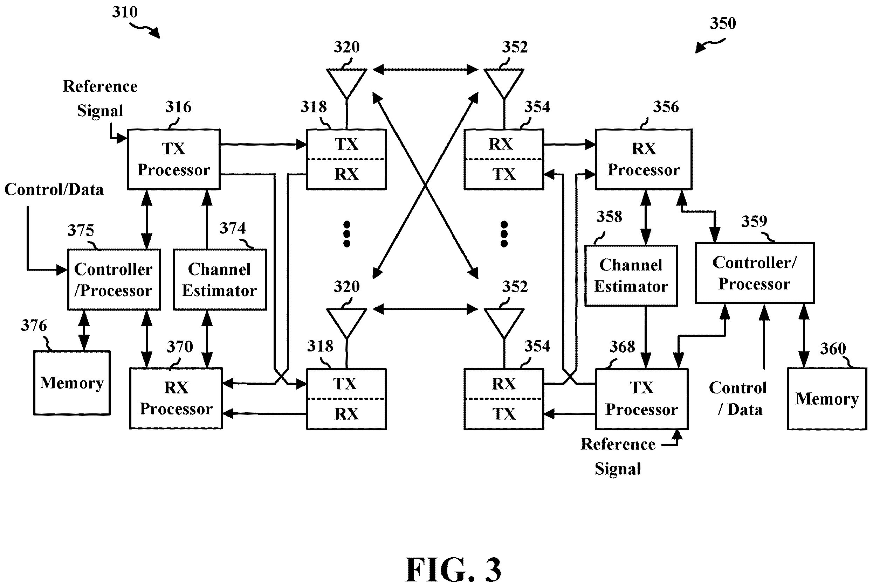

FIG. 3 is a block diagram of an eNB 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demuliplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the eNB 310. These soft decisions may be based on channel estimates computed by the channel estimator 358. The soft decisions are then decoded and deinterleaved to recover the data and control signals that were originally transmitted by the eNB 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the eNB 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demuliplexing of MAC SDUs from TBs, scheduling information reporting, error correction through HARQ, priority handling, and logical channel prioritization.

Channel estimates derived by a channel estimator 358 from a reference signal or feedback transmitted by the eNB 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the eNB 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

LTE-D may provide ProSe that allows device-to-device technology. Device-to-device technology may enable a UE to detect another device (e.g., stationary UE and/or mobile UE) directly. Advertisements may be transmitted and/or broadcast by stationary UEs (e.g., businesses and/or retail outlets) that may be directly (e.g., without communications being relayed through the eNB) received by a mobile UE. However, the mobile UE may not be aware of all of the stationary UEs within the UE's vicinity. Therefore, the mobile UE may not be able to discover and/or decode all advertisements being broadcast.

In order to provide a solution to the problem, the present disclosure enables an eNB to identify and/or profile stationary UEs verses mobile UEs located within the UE's cell. In addition, the eNB may tailor a discovery filter that includes all of the PACs (e.g., advertisements) being transmitted by stationary UEs within a vicinity of the cell. The discovery filter may be shared with a network server such that a mobile UE requesting information associated with a particular PAC will receive a list of all PACs within the vicinity of the mobile UE.

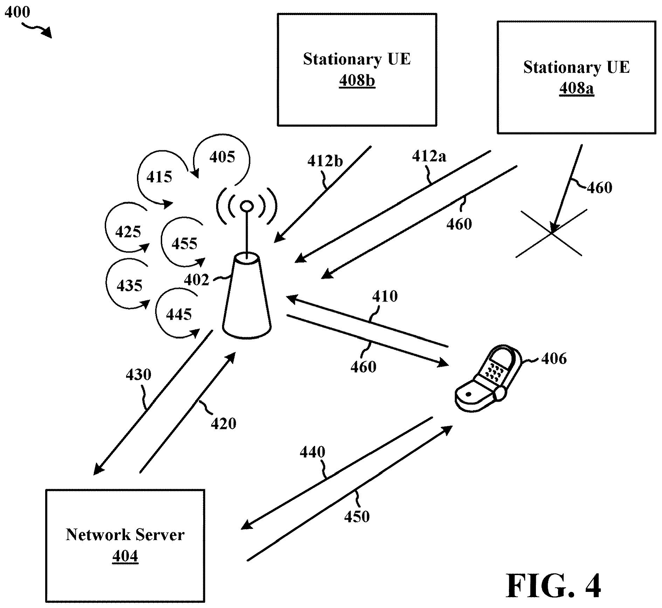

FIG. 4 is an exemplary diagram of a communications system 400 that is able to identify and/or profile mobile UEs and non-mobile UEs. In addition, communications system 400 may be able to formulate optimum (e.g., more relevant) discovery filters for mobile UEs. As illustrated in FIG. 4, the communications system 400 includes an eNB 402, a plurality of stationary UEs 408a, 408b (e.g., businesses and/or retail outlets), a network server 404 (e.g., ProSe Function / LTE-D server), and at least one mobile UE 406 (e.g., a LTE-D UE).

In one aspect, the eNB 402 may monitor 405 transmissions 410, 412a, 412b from a plurality of UEs 406, 408a, 408b over a period of time. Based on one or more features associated with the transmissions 410, 412a, 412b, the eNB 402 may determine 415 that at least one of the UEs 406, 408a, 408b is stationary. The transmissions 412a, 412b from the stationary UEs 408a, 408b may include device-to-device application codes such as PACs. For example, a PAC may be a code of a particular application (e.g., advertisement) that is hashed by the network server 404 into an application that may be decoded by the mobile UE 406.

If the eNB 402 determines 415 that a PAC with the same transmission features is being sent by a UE for a certain amount of time (e.g., hours, days, and/or weeks), the eNB 402 may determine 415 that that UE is stationary. In an aspect, eNB 402 may determine 415 that UEs 408a, 408b are stationary based on at least one of a transmission power, an angle of transmission arrival, and/or other transmission metric that remains constant or substantially constant over a certain period of time. Once the eNB 402 determines 415 that a UE is stationary (e.g., stationary UEs 408a, 408b), the eNB 402 may determine 425 if the stationary UEs 408a, 408b are business(es) and/or retail outlet(s) by decoding the PACs.

Still referring to FIG. 4, mobile UE 406 may send a discovery request 440 associated with at least one PAC to the network server 404. In an aspect, the mobile UE 406 may request the PAC for stationary UE 408a but not the PAC for stationary UE 408b, e.g., when the mobile UE 406 is not aware of the stationary UE 408b.

The network server 404 may send a request 420 to the eNB 402 (e.g., via an MME not illustrated in FIG. 4) for a list of any PACs transmitted (e.g., being broadcast) by stationary UEs (e.g., UEs 408a, 408b). In response to the request 420, the eNB 402 may transmit information 430 (e.g., a discovery filter) associated with the PACs being broadcast by the stationary UEs 408a, 408b to the network server 404 (e.g., via an MME). Alternatively, the eNB 402 may transmit and/or broadcast the discovery filter 430 associated with the PACs automatically without receiving a request 420 from the network server 404. In either scenario, the network server 404 may transmit a discovery response 450 to the mobile UE 406. In an aspect, the discovery response 450 may include first information associated with the PAC requested (e.g., PAC associated with stationary UE 408b) by the mobile UE 405 and at least one PA not requested (e.g., PAC associated with stationary UE 408b) by the mobile UE 406. In addition, the mobile UE 406 may request 410 one or more resources for device-to-device communications with at least one of the stationary UEs 408a, 408b.

In a first example embodiment, the discovery filter 430 and/or discovery response 450 may include a list of all PACs available in a cell of the eNB 402. In an aspect, the list may include at least one PAC that is not requested by the mobile UE 406 and/or the network server 404.

In a second example embodiment, the list included the discovery filter 430 and/or discovery response 450 may include one or more PACs available in one or more neighboring cells (not illustrated in FIG. 4).

In a third example embodiment, the eNB 402 may determine 435 that the stationary UE 408a is not discoverable by mobile UE 406 (e.g., based on a distance between the mobile UE 406 and the stationary UE 408a). In other words, the PAC 460 transmitted/broadcast by stationary UE 408a may not reach the mobile UE 406. When the PAC 460 does not reach the mobile UE 406, the eNB 402 may act as a relay between the stationary UE 408a and the mobile UE 406 by transmitting the PAC 470 to the mobile UE 406.

In a fourth example embodiment, the eNB 402 may determine 445 a directionality associated with the mobile UE 406 by monitoring a plurality of transmissions 410 from the mobile UE 406 over a period of time. In an aspect, the directionality may be determined based on at least one of a positioning reference signal, an observed time difference in a transmission arrival, global positioning system information, measurement reports, and/or an angle at which transmissions 410 are received from the mobile UE 406. In the fourth example embodiment, the discovery filter 430 transmitted by the eNB 402 to the network server 404 may include a list of PACs prioritized based on the directionality of the mobile UE 406.

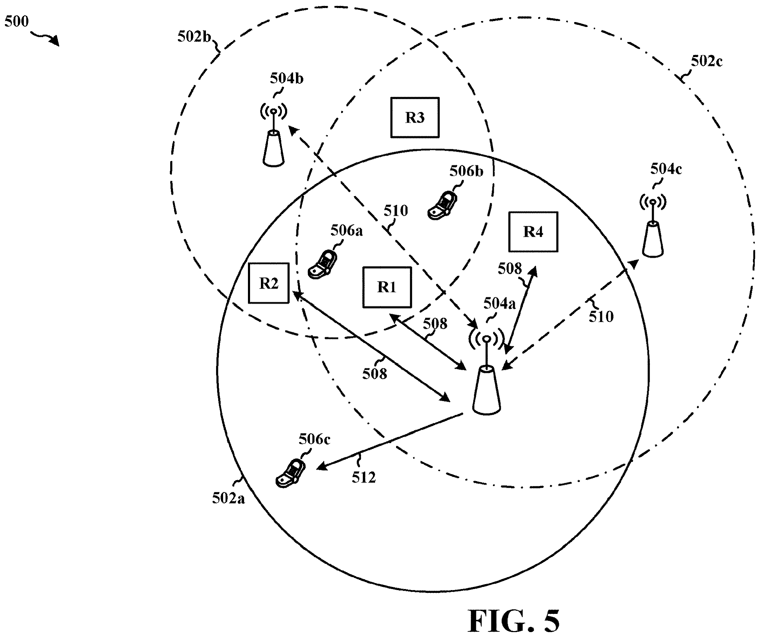

Additional details of the first example embodiment, the second example embodiment, the third example embodiment, and the fourth example embodiment are discussed *infra* with respect to FIG. 5.

FIG. 5 illustrates a communications system 500 in which an eNB 504a sets discovery filters based on all PACs transmitted and/or broadcast in a cell 502a and possibly in neighboring cells 502b, 502c. For example, communications system 500 includes a plurality of overlapping cells 502a, 502b, 502c that each include a respective eNB 504a, 504b, 504c. In an aspect, cell 502a includes eNB 504a, retail outlets R1, R2, R4 (e.g., stationary UEs), and mobile UEs 506a, 506b, 506c. Cell 502b includes eNB 504b, retail outlets R1, R2, R3 (e.g., stationary UEs), and mobile UEs 506a, 506b. In addition, cell 502c includes eNB 504c, retail outlets R1, R3, R4 (e.g., stationary UEs), and mobile UEs 506a, 506b.

By way of example, assume that mobile UE 506a sends a discovery request to a network server (not illustrated in FIG. 5) for a PAC associated with R2 but not for R1 or R4. The network server may send a request for a discovery filter to eNB 504a.

With reference the first example embodiment discussed *supra,* the eNB 504a may determine the PACs 508 broadcast by the retail outlets located in cell 502a. In addition, the eNB 504a may set the list of the discovery filters transmitted and/or broadcast by the retail outlets to the network server to include the PACs for each of R1, R2, and R4 that are located in cell 502a irrespective of a proximity of a mobile UE 506a, 506b, 506c to the retail outlets R1, R2, R4.

With reference the second example embodiment discussed *supra,* the eNB 504a may be in communication 510 with the eNBs 504b, 504c of neighboring cells 502b, 502c, and receive information associated with PACs broadcast by retail outlets located in the neighboring cells 502b, 502c. Based on the information associated with the PACs broadcast in neighboring cells, the eNB 504a may set the list of the discovery filter transmitted and/or broadcast by the retail outlets to the network server to include the PAC associated with R3 as well as R1, R2, and R4.

With reference the third example embodiment discussed *supra,* the eNB 504a may determine that retail outlet R4 and mobile UE 506c cannot discover each other unless eNB 504a acts as a relay between the mobile UE 506c and the retail outlet R4. For example, the eNB 504a may receive one or more PACs 508 from R4, and then transmit the PACs 512 to mobile UE 506c. In an aspect, this may be an n-hop sequence and the repetition may be configured for a desirable number of hops.

With reference to the fourth example embodiment discussed *supra,* the eNB 504a may locate one or more of the mobile UEs 506a, 506b, 506c based on at least one of a positioning reference signal, an observed time difference in a transmission arrival, global positioning system information, measurement reports, or an angle at which transmissions are received. Here, the eNB 504a may transmit a discovery filter that includes a prioritized list of PACs that is based on the directionality of the mobile UE.

In this way, the mobile UEs 506a, 506b, 506c may benefit by getting a prepopulated list of services (e.g., advertisements)(e.g., provided by R1, R2, R3, and/or R4) available within the cell 502a and within one or more neighboring cells 502b, 502c.

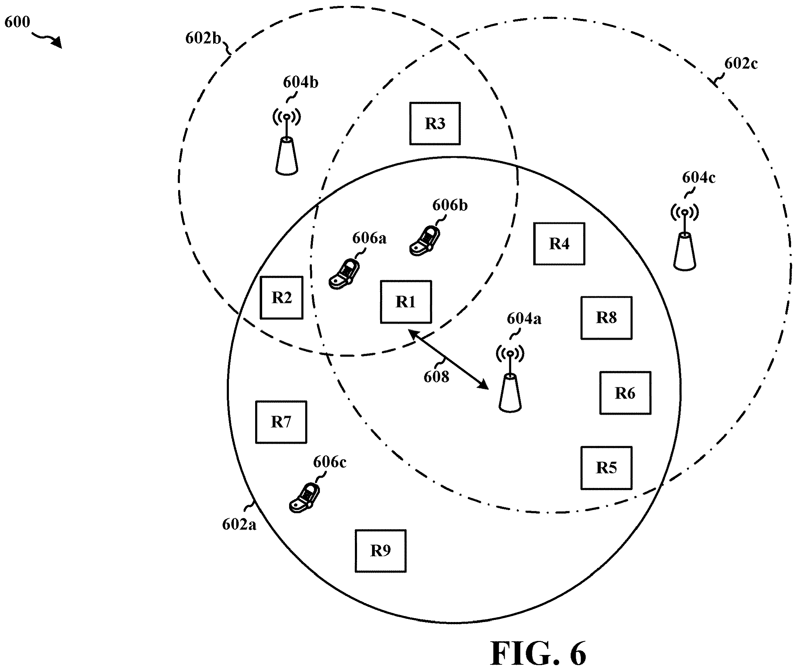

Referring again to FIG. 4, in a fifth example embodiment, the eNB 402 may perform proximity based sorting of the PACs included in the discovery filter. For example, the eNB 402 may determine 455 that mobile UE 406 is closer to stationary UE 408a than stationary UE 408b. Thus, the discovery filter 430 transmitted to the network server 404 may include a prioritized list of PACs with the PAC of the stationary UE 408a prioritized higher than the PAC of stationary UE 408b. Additional details of the fifth example embodiment are discussed *infra* with respect to FIG. 6

FIG. 6 illustrates a communications system 600 in which an eNB 604a may assign directionality to one or more mobile UEs 606a, 606b, 606c to tailor discovery filters at a more granular level and enable proximity based PAC indications. For example, communications system 600 includes a plurality of overlapping cells 602a, 602b, 602c that each include a respective eNB 604a, 604b, 604c. Cell 602a includes eNB 604a, retail outlets R1, R2, R4, R5, R6, R7, R8, R9 (e.g., stationary UEs), and mobile UEs 606a, 606b, 606c. Cell 602b includes eNB 604b, retail outlets R1, R2, R3 (e.g., stationary UEs), and mobile UEs 606a, 606b. In addition, cell 602c includes eNB 604c, retail outlets R1, R3, R4, R5, R6, R8 (e.g., stationary UEs), and mobile UEs 606a, 606b.

As discussed *supra,* the eNB 604a, 604b, 604c may determine the retail outlets that are broadcasting PACs 608 (e.g., only PAC 608 being transmitted by R1 is illustrated for clarity in FIG. 6 but each of the retail outlets may be broadcasting one or more PACs) in the vicinity of a particular mobile UE. The eNB 604a may transmit a discovery filter to a network server (not illustrated in FIG. 6) including a prioritized list of PACs based on the location of the mobile UE.

In a first example, for mobile UE 606a, the discovery filter transmitted by eNB 604a to the network server may include R2, R1, R7, R3, R4, R8, R6, R9, and R5 in prioritized order based on proximity of UE 606a to each of the retail outlets R2, R1, R7, R3, R4, R8, R6, R9, and R5. In a second example, for mobile UE 606b, the discovery filter transmitted by eNB 604a to the network server may include R1, R2, R3, R4, R8, R6, R7, R5, and R9 in prioritized order based on proximity of the UE 606b to each of the retail outlets R1, R2, R3, R4, R8, R6, R7, R5, and R9. In a third example, for mobile UE 606c, the discovery filter transmitted by eNB 604a to the network server may include R7, R9, R2, R1, R5, R6, R8, R4 and R3 in prioritized order based on proximity of the UE 606c to each of the retail outlets R7, R9, R2, R1, R5, R6, R8, R4 and R3.

In addition, the network server (not illustrated in FIG. 6) may also prioritize a discover filter for a mobile UE based on user history for the mobile UE in addition to the location based filtering (e.g., pre-sorting) provided by the eNB 604a.

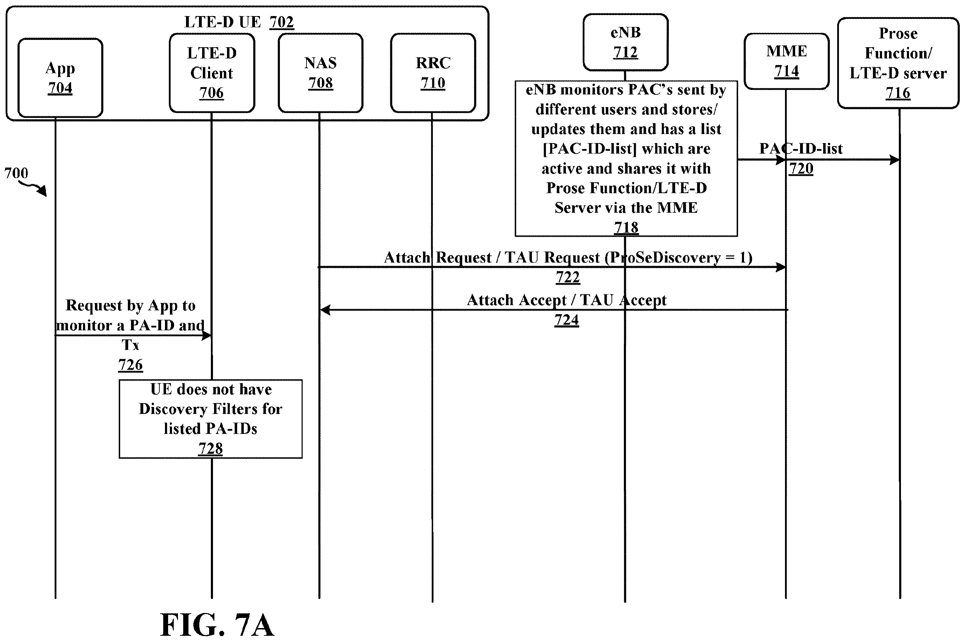

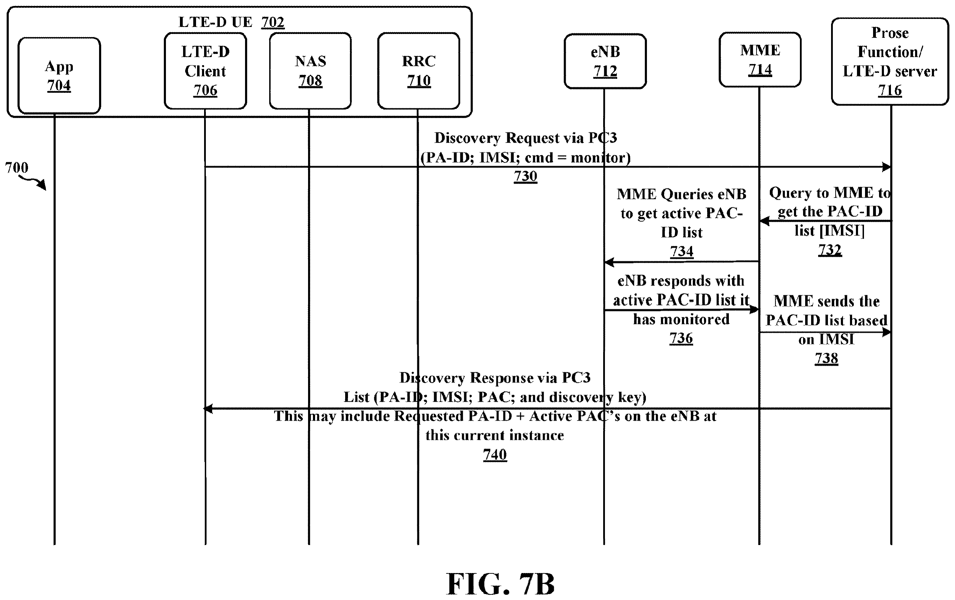

FIGs. 7A and 7B illustrate a flow diagram 700 for a PAC discovery procedure of an LTE-D UE 702 (e.g., mobile UE). FIGs. 7A and 7B represent one flow diagram 700 where FIG. 7B continues from FIG. 7A. The LTE-D UE 702 may include an application layer 704, an LTE-D client layer 706, a NAS layer 708, and/or an RRC layer 710.

As illustrated in FIG. 7A, the eNB 712 may monitor 718 PACs sent by different UEs (e.g., stationary UEs). The eNB may store and/or update the PACS in an active list (e.g., PAC-ID-list). In an aspect, the eNB 712 may share the PAC-ID-list 720 with the ProSe Function / LTE-D server 716 via the MME 714.

The NAS layer 708 of the LTE-D UE 702 may send an attach request / tracking area update (TAU) request 722 to the MME 714. For example, the attach request / TAU request 722 may be sent by the NAS layer 708 when the LTE-D UE 702 determines that it has entered a new tracking area (TA) that is not in a list of tracking area indicators (TAIs) with which the LTE-D UE 702 is registered. In an aspect, the attach request / TAU request 722 may include a ProSeDiscovery bit that is set to "1". If the attach request / TAU request 722 is accepted by the communications network, the MME 714 may send an attach accept / TAU accept message 724 to the NAS layer 708 of the LTE-D UE 702.

In addition, an application layer 704 of the LTE-D UE 702 may send a request 726 to the LTE-D client layer 706 to monitor one or more ProSe Application identifiers (PA-ID) and transmissions. The LTE-D client layer 706 may determine 728 that the LTE-D UE 702 does not have a discovery filter for the requested PA-ID(s).

As illustrated in FIG. 7B, the LTE-D client layer 706 may send a discovery request 730 to the ProSe Function / LTE-D server 716. For example, the discovery request 730 may be sent over a PC3 interface (e.g., an interface between the LTE-D UE 702 and the ProSe Function / LTE-D server 716). In addition, the discovery request 730 may include information associated with the PAC-ID requested by the application layer 704 of the LTE-D UE 702, an international mobile subscriber identity (IMSI) associated with the LTE-D UE 702, and/or a command (cmd) set to "monitor".

The ProSe Function / LTE-D server 716 may send a query 732 to the MME 714 to obtain the PAC-ID list. In an aspect, the query 732 may include the IMSI associated with the LTE-D UE 702. The MME 714 may send a query 734 to the eNB 712 requesting the PAC-ID list. In an aspect, the query 734 may include the IMSI associated with the LTE-D UE 702. The eNB 712 may respond 736 with the active PAC-ID list (e.g., that may be tailored for the LTE-D UE 702). The MME 714 may send the active PAC-ID list 738 to the ProSe Function / LTE-D Server 716 based on the IMSI associated with the LTE-D UE 702.

The ProSe Function / LTE-D server 716 may send a discovery response 740 to the LTE-D client layer 706 of the LTE-D UE 702. For example, the discovery response 740 may be sent over the PC3 interface and include the PAC-ID list. In addition, the discovery response 740 may include the requested PA-ID, the IMSI associated with the LTE-D UE 702, a list of active PACs detected by the eNB 712, and a discovery key that may be used to discover the PACs transmitted by stationary UEs.

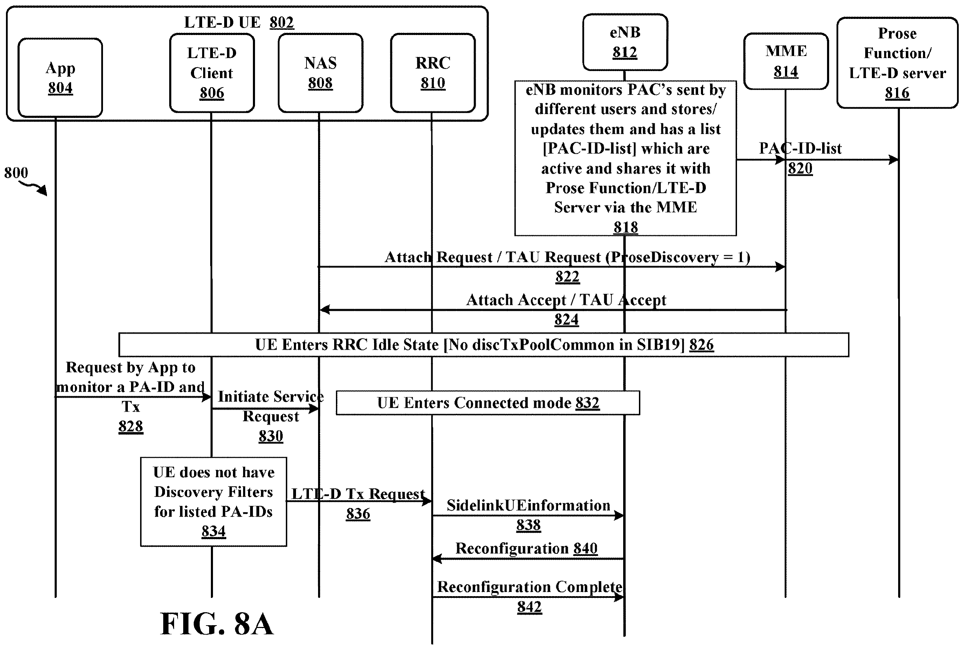

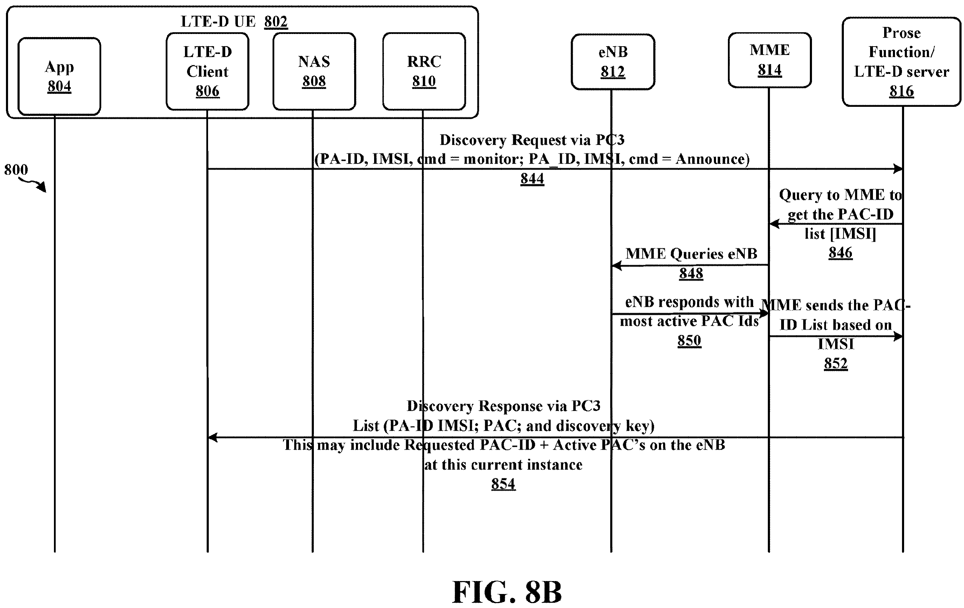

FIGs. 8A and 8B illustrate a flow diagram 800 for a PAC discovery procedure of an LTE-D UE 802 (e.g., a mobile UE). FIGs. 8A and 8B represent one flow diagram 800 where FIG. 8B continues from FIG. 8A. The LTE-D UE 802 may include an application layer 804, an LTE-D client layer 806, a NAS layer 808, and/or an RRC layer 810.

As illustrated in FIG. 8A, the eNB 812 may monitor 818 PACs sent by different users (e.g., stationary UEs). The eNB 812 may store and/or update the PACS in an active list (e.g., PAC-ID-list). In an aspect, the eNB 812 may share the PAC-ID-list 820 with the ProSe Function/LTE-D server 816 via the MME 814.

The NAS layer 808 of the LTE-D UE 802 may send an attach request / TAU request 822 to the MME 814. For example, the attach request / TAU request 822 may be sent by the NAS layer 808 when the LTE-D UE 802 determines that it has entered a new TA that is not in a list of TAIs with which the LTE-D UE 802 is registered. In addition, the attach request / TAU request 822 may include a ProSeDiscovery bit that is set to "1". If the attach request / TAU request 822 is accepted by the communications network, the MME 814 may send an attach accept / TAU accept message 824 to the NAS layer 808 of the LTE-D UE 802.

The RRC layer 810 of LTE-D UE 802 may enter an RRC idle state 826 when there is no PA-ID the LTE-D UE 802 is interested in discovering (e.g., No discTxPoolCommon in SIB 19).

When there is a PA-ID the LTE-UE 802 is interested in discovering, the application layer 804 of the LTE-D UE 802 may send a request 828 to the LTE-D client layer 806 to monitor one or more PA-IDs and transmissions. The LTE-D client layer 806 may send an initiate service request 830 to the NAS layer 808. The LTE-D UE 802 may enter a connected mode 832.

The LTE-D client layer 806 may determine 834 that the LTE-D UE 802 does not have a discovery filter for the requested PA-ID(s). An LTE-D transmission (Tx) request 836 may be sent from the LTE-D client layer 806 to the RRC layer 810. The RRC layer 810 may send sidelink UE information 838 to the eNB 812 for reconfiguration. The eNB 812 may send a reconfiguration message 840 to the RRC layer 810. The RRC layer 810 may send a reconfiguration complete message 842 to the eNB 812.

As illustrated in FIG. 8B, the LTE-D client layer 806 may send a discovery request 844 to the ProSe Function / LTE-D server 816. For example, the discovery request 844 may be sent over a PC3 interface (e.g., an interface between the LTE-D UE 802 and the ProSe Function / LTE-D server 816). In addition, the discovery request 844 may include information associated with the PA-ID requested by the application layer 804 of the LTE-D UE 802, an IMSI associated with the LTE-D UE 802, a cmd set to "monitor", and/or a cmd set to "announce".

The ProSe Function / LTE-D server 816 may send a query 846 to the MME 814 to obtain the PAC-ID list. In an aspect, the query 846 may include the IMSI with the LTE-D UE 802. The MME 814 may send a query 848 to the eNB 812 requesting the PAC-ID list. In an aspect, the query 848 may include the IMSI associated with the LTE-D UE 802. The eNB 812 may respond with the active PAC-ID list 850 (e.g., that may be tailored for the LTE-D UE 802 when the IMSI is received by the eNB 812 in the query 848). The MME 814 may send the PAC-ID list 852 to the ProSe Function / LTE-D Server 816 based on the IMSI associated with the LTE-D UE 802.

The ProSe Function / LTE-D server 816 may send a discovery response 854 to the LTE-D client layer 806 of the LTE-D UE 802. For example, the discovery response 854 may be sent over the PC3 interface and include the PAC-ID list. In addition, the discovery response 754 may include the requested PA-ID, the IMSI associated with the LTE-D UE 802, a list of active PACs detected by the eNB 812, and a discovery key that may be used to discover the PACs transmitted by stationary UEs.

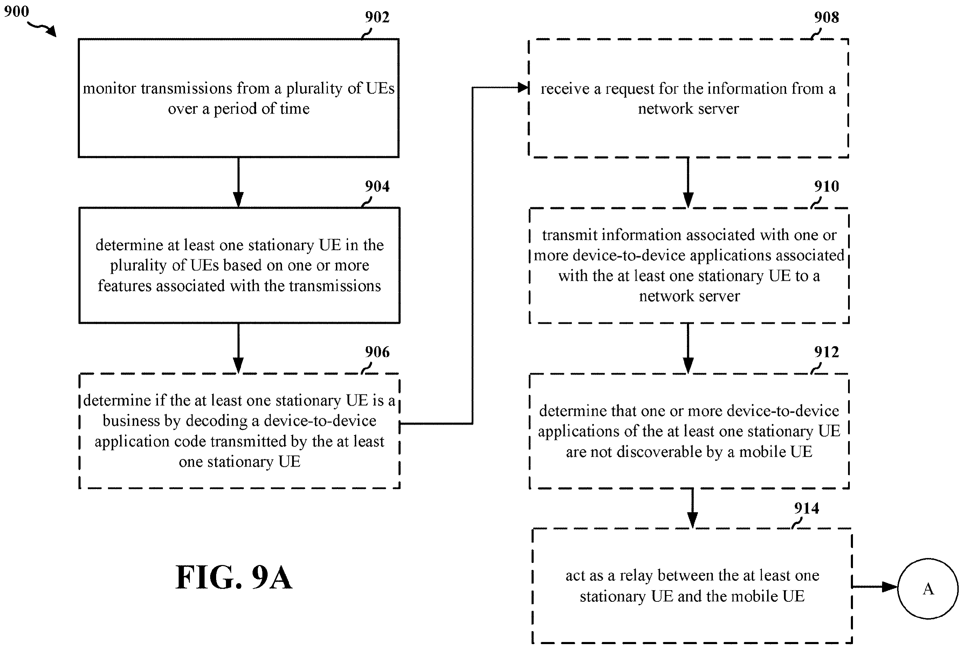

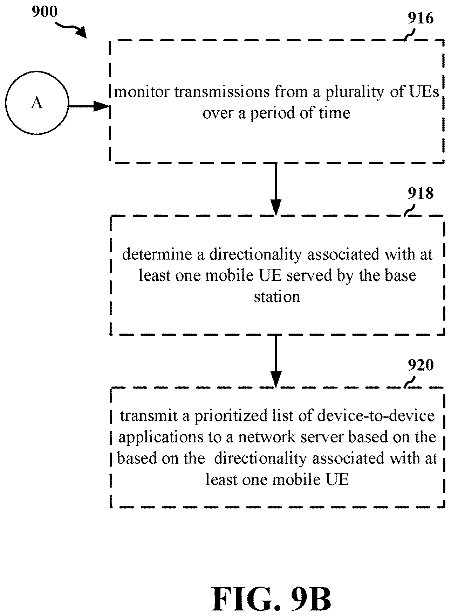

FIGs. 9A and 9B are a flowchart 900 of a method of wireless communication. The method may be performed by an eNB (e.g., the eNB 402, the apparatus 1002/1002'). Operations indicated with dashed lines represent optional operations for various aspects of the disclosure.

As illustrated in FIG. 9A, at 902, the eNB may monitor transmissions from a plurality of UEs over a period of time. For example, referring to FIG. 4, the eNB 402 may monitor 405 transmissions 410, 412a, 412b from a plurality of UEs 406, 408a, 408b over a period of time.

At 904, the eNB may determine at least one stationary UE in the plurality of UEs based on one or more features associated with the transmissions. For example, referring to FIG. 4, based on one or more features associated with the transmissions 410, 412a, 412b, the eNB 402 may determine 415 that at least one of the UEs 406, 408a, 408b is stationary. The transmissions 412a, 412b from the stationary UEs 408a, 408b may include device-to-device application code such as a PAC. For example, a PAC may be a code of a particular application (e.g., advertisement) that is hashed by the network server 404 into an application that may be decoded by the mobile UE 406. If the eNB 402 determines 415 that a PAC with the same features is being sent by a UE for a certain amount of time (e.g., hours, days, and/or weeks), the eNB 402 may determine 415 that the UE is stationary. In an aspect, eNB 402 may determine that UEs 408a, 408b are stationary based on at least one of a transmission power, an angle of transmission arrival, and/or other transmission metric that remains constant or substantially constant over a certain period of time.

At 906, the eNB may determine if the at least one stationary UE is a business by decoding a device-to-device application code transmitted by the at least one stationary UE. For example, referring to FIG. 4, if the eNB 402 determines 415 that a PAC with the same features is being sent by a UE for a certain amount of time (e.g., hours, days, and/or weeks), the eNB 402 may determine 415 that that UE is stationary. In an aspect, eNB 402 may determine that UEs 408a, 408b are stationary based on at least one of a transmission power, an angle of transmission arrival, and/or any other transmission metric that remains constant or substantially constant over a certain period of time. Once the eNB 402 determines 415 that a UE is stationary (e.g., stationary UEs 408a, 408b), the eNB 402 determines 425 if the stationary UEs 408a, 408b are business(es) and/or retail outlet(s) by decoding the PACs.

At 908, the eNB may receive a request for the information from a network server. For example, referring to FIG. 4, the network server 404 may send a request 420 to the eNB 402 (e.g., via an MME not illustrated in FIG. 4) for a list of any PACs transmitted (e.g., being broadcast) by stationary UEs (e.g., UEs 408a, 408b).

At 910, the eNB may transmit information associated with one or more device-to-device applications associated with the at least one stationary UE to a network server. For example, referring to FIG. 4, in response to the request 420, the eNB 402 may transmit information 430 (e.g., a discovery filter) associated with the PACs being broadcast by the stationary UEs 408a, 408b to the network server 404 (e.g., via an MME). Alternatively, the eNB 402 may transmit and/or broadcast the discovery filter 430 associated with the PACs automatically without receiving a request 420 from the network server 404.

At 912, the eNB may determine that one or more device-to-device applications of the at least one stationary UE are not discoverable by a mobile UE. For example, referring to FIG. 4, the eNB 402 may determine 435 that the stationary UE 408a is not discoverable by mobile UE 406 (e.g., based on a distance between the mobile UE 406 and the stationary UE 408a). In other words, the PAC 460 transmitted/broadcast by stationary UE 408a may not reach the mobile UE 406. In this scenario, the eNB 402 may act as a relay between stationary UE 408a and the mobile UE 406 by transmitting the PAC 460 to the mobile UE 406.

At 914, the eNB may act as a relay between the at least one stationary UE and the mobile UE. For example, referring to FIG. 4, the eNB 402 may determine 435 that the stationary UE 408a is not discoverable by mobile UE 406 (e.g., based on a distance between the mobile UE 406 and the stationary UE 408a). In other words, the PAC 460 transmitted/broadcast by stationary UE 408a may not reach the mobile UE 406. In this scenario, the eNB 402 may act as a relay between stationary UE 408a and the mobile UE 406 by transmitting the PAC 460 to the mobile UE 406.

As seen in FIG. 9B, at 916, the eNB may monitor transmissions from a plurality of UEs over a period of time. For example, referring to FIG. 4, the eNB 402 may determine 445 a directionality associated with the mobile UE 406 by monitoring a plurality of transmissions 410 from the mobile UE 406 over a period of time. In an aspect, the directionality may be determined based on at least one of a positioning reference signal, an observed time difference in a transmission arrival, global positioning system information, measurement reports, and/or an angle at which transmissions 410 are received from the mobile UE 406.

At 918, the eNB may determine a directionality associated with at least one mobile UE served by the base station. For example, referring to FIG. 4, the eNB 402 may determine 445 a directionality associated with the mobile UE 406 by monitoring a plurality of transmissions 410 from the mobile UE 406 over a period of time. In an aspect, the directionality may be determined based on at least one of a positioning reference signal, an observed time difference in a transmission arrival, global positioning system information, measurement reports, and/or an angle at which transmissions 410 are received from the mobile UE 406.

At 920, the eNB may transmit a prioritized list of device-to-device applications to a network server based on the based on the directionality associated with at least one mobile UE. For example, referring to FIG. 4, the discovery filter 430 transmitted by the eNB 402 to the network server 404 may include a list of PACs prioritized based on the directionality of the mobile UE 406.

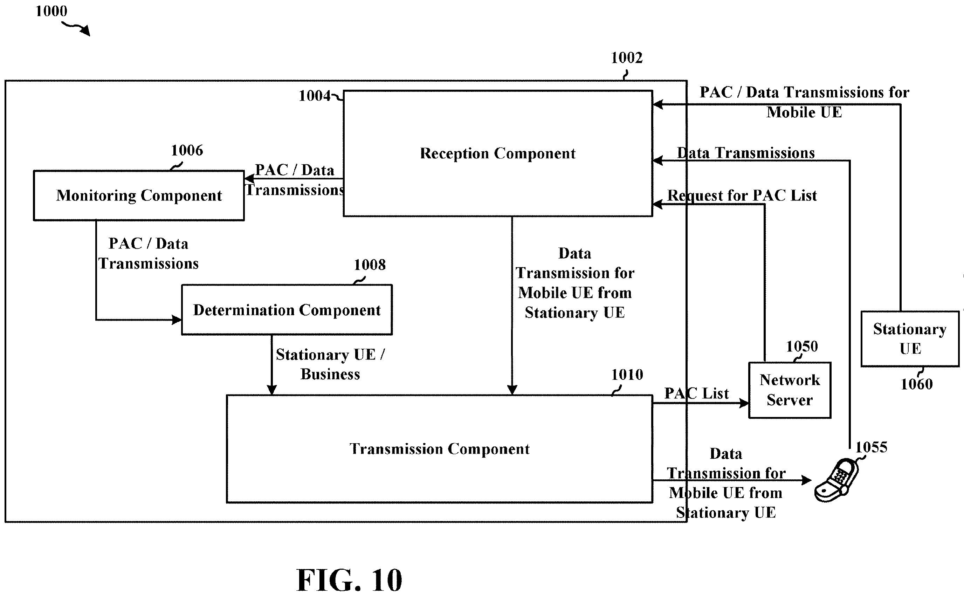

FIG. 10 is a conceptual data flow diagram 1000 illustrating the data flow between different means/components in an exemplary apparatus 1002. The apparatus may be an eNB. The apparatus includes a reception component 1004 that receives PACs and/or data transmissions intended for mobile UE 1055 from one or more stationary UEs 1060. In addition, the reception component 1004 may receive a request for a PAC list from a network server 1050. Still further, the reception component 1004 may receive data transmissions from mobile UE 1055. The apparatus also includes a monitoring component 1006 that monitors the PACs and/or data transmissions received by the reception component 1004. The apparatus further includes a determination component 1008 that determines if one or more of the UEs 1055, 1060 is stationary and/or a business based on at least one feature of the transmissions received from the UEs 1055, 1060. In addition, the apparatus includes a transmission component 1010 that transmits a PAC list to the network server 1050. Moreover, the transmission component 1010 may relay data transmissions from the stationary UE 1060 to the mobile UE 1055.

The apparatus may include additional components that perform each of the blocks of the algorithm in the aforementioned flowcharts of FIGs. 9A and 9B. As such, each block in the aforementioned flowcharts of FIGs. 9A and 9B may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

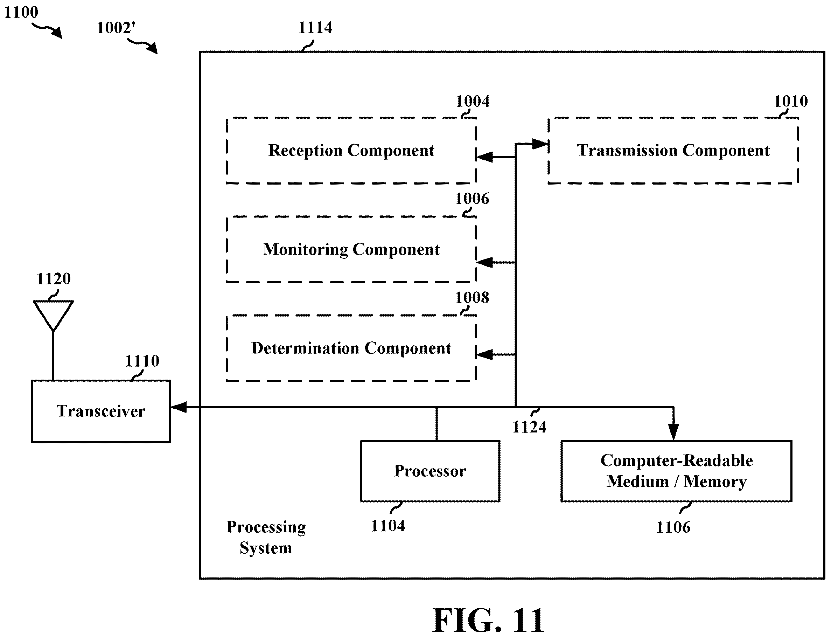

FIG. 11 is a diagram 1100 illustrating an example of a hardware implementation for an apparatus 1002' employing a processing system 1114. The processing system 1114 may be implemented with a bus architecture, represented generally by the bus 1124. The bus 1124 may include any number of interconnecting buses and bridges depending on the specific application of the processing system 1114 and the overall design constraints. The bus 1124 links together various circuits including one or more processors and/or hardware components, represented by the processor 1104, the components 1004, 1006, 1008, 1010 and the computer-readable medium / memory 1106. The bus 1124 may also link various other circuits such as timing sources, peripherals, voltage regulators, and power management circuits, which are well known in the art, and therefore, will not be described any further.

The processing system 1114 may be coupled to a transceiver 1110. The transceiver 1110 is coupled to one or more antennas 1120. The transceiver 1110 provides a means for communicating with various other apparatus over a transmission medium. The transceiver 1110 receives a signal from the one or more antennas 1120, extracts information from the received signal, and provides the extracted information to the processing system 1114, specifically the reception component 1004. In addition, the transceiver 1110 receives information from the processing system 1114, specifically the transmission component 1010, and based on the received information, generates a signal to be applied to the one or more antennas 1120. The processing system 1114 includes a processor 1104 coupled to a computer-readable medium / memory 1106. The processor 1104 is responsible for general processing, including the execution of software stored on the computer-readable medium / memory 1106. The software, when executed by the processor 1104, causes the processing system 1114 to perform the various functions described *supra* for any particular apparatus. The computer-readable medium / memory 1106 may also be used for storing data that is manipulated by the processor 1104 when executing software. The processing system 1114 further includes at least one of the components 1004, 1006, 1008, 1010. The components may be software components running in the processor 1104, resident/stored in the computer readable medium / memory 1106, one or more hardware components coupled to the processor 1104, or some combination thereof. The processing system 1114 may be a component of the eNB 310 and may include the memory 376 and/or at least one of the TX processor 316, the RX processor 370, and the controller/processor 375.

In one configuration, the apparatus 1002/1002' for wireless communication includes means for monitoring transmissions from a plurality of UEs over a period of time. In another configuration, the apparatus 1002/1002' for wireless communication includes means for determining at least one stationary UE in the plurality of UEs based on one or more features associated with the transmissions. In an aspect, the means for determining may be configured to determine that the one or more features remain constant over the period of time. For example, the one or more features include at least one of a transmission power and an angle of transmission arrival. In a further configuration, the apparatus 1002/1002' for wireless communication includes means for determining if the at least one stationary UE is a business by decoding a device-to-device application code transmitted by the at least one stationary UE. In yet another configuration, the apparatus 1002/1002' for wireless communication includes means for transmitting information associated with one or more device-to-device applications associated with the at least one stationary UE to a network server. In an aspect, the information may include a discovery filter. In another aspect, the discovery filter includes a list of first device-to-device applications available in a cell of the base station. In a further aspect, the list of first device-to-device applications includes at least one device-to-device application that is not requested. In still another aspect, the list further comprises second device-to-device applications available in one or more neighboring cells. In another configuration, the apparatus 1002/1002' for wireless communication includes means for receiving a request for the information from a network server. In an aspect, the information may be transmitted to the network server based on the request. In a further configuration, the apparatus 1002/1002' for wireless communication includes means for determining that one or more device-to-device applications of the at least one stationary UE are not discoverable by a mobile UE. In yet another configuration, the apparatus 1002/1002' for wireless communication includes means for acting as a relay between the at least one stationary UE and the mobile UE. In yet a further configuration, the apparatus 1002/1002' for wireless communication includes means for determining a directionality associated with at least one mobile UE served by the base station. In an aspect, the directionality may be determined based one at least one of a positioning reference signal, an observed time difference in a transmission arrival, global positioning system information, measurement reports, or an angle at which transmissions are received. In a further configuration, the apparatus 1002/1002' for wireless communication includes means for transmitting a prioritized list of device-to-device applications to a network server. In an aspect, the device-to-device applications may be prioritized based on the directionality associated with at least one mobile UE. The aforementioned means may be one or more of the aforementioned components of the apparatus 1002 and/or the processing system 1114 of the apparatus 1002' configured to perform the functions recited by the aforementioned means. As described *supra,* the processing system 1114 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

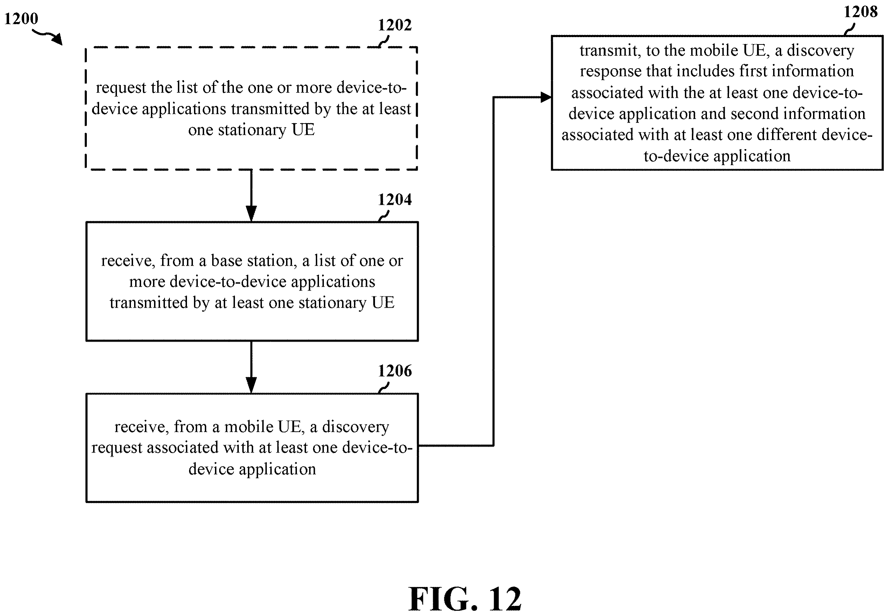

FIG. 12 is a flowchart 1200 of a method of wireless communication. The method may be performed by a ProSe Function / Network Server (e.g., the network server 404, the apparatus 1302/1302'). Operations indicated with dashed lines represent optional operations for various aspects of the disclosure.

At 1202, the network server may request a list of the one or more device-to-device applications transmitted by the at least one stationary UE. For example, referring to FIG. 4, the network server 404 may send a request 420 to the eNB 402 (e.g., via an MME not illustrated in FIG. 4) for a list of any PACs transmitted (e.g., being broadcast) by stationary UEs (e.g., UEs 408a, 408b).

At 1204, the network server may receive, from a base station, the list of one or more device-to-device applications transmitted by at least one stationary UE. For example, referring to FIG. 4, in response to the request 420, the eNB 402 may transmit information 430 (e.g., a discovery filter) associated with the PACs being broadcast by the stationary UEs 408a, 408b to the network server 404 (e.g., via an MME). Alternatively, the eNB 402 may transmit and/or broadcast the discovery filter 430 associated with the PACs automatically without receiving a request 420 from the network server 404.

At 1206, the network server may receive, from a mobile UE, a discovery request associated with at least one device-to-device application. For example, referring to FIG. 4, mobile UE 406 may send a discovery request 440 associated with at least one PAC to the network server 404. In an aspect, the mobile UE 406 may request the PAC for the stationary UE 408a but not the PAC for the stationary UE 408b, e.g., when the mobile UE 406 is not aware of the stationary UE 408b.

At 1208, the network server may transmit, to the mobile UE, a discovery response that includes first information associated with the at least one device-to-device application and second information associated with at least one different device-to-device application. For example, referring to FIG. 4, the network server 404 may transmit a discovery response 450 to the mobile UE 406. In an aspect, the discovery response 450 may include first information associated with the PAC requested (e.g., PAC associated with stationary UE 408a) by the mobile UE 405 and at least one PAC not requested (e.g., a PAC associated with stationary UE 408b) by the mobile UE 406. In addition, the mobile UE 406 may request 410 one or more resources for device-to-device communications with at least one of the stationary UEs 408a, 408b.

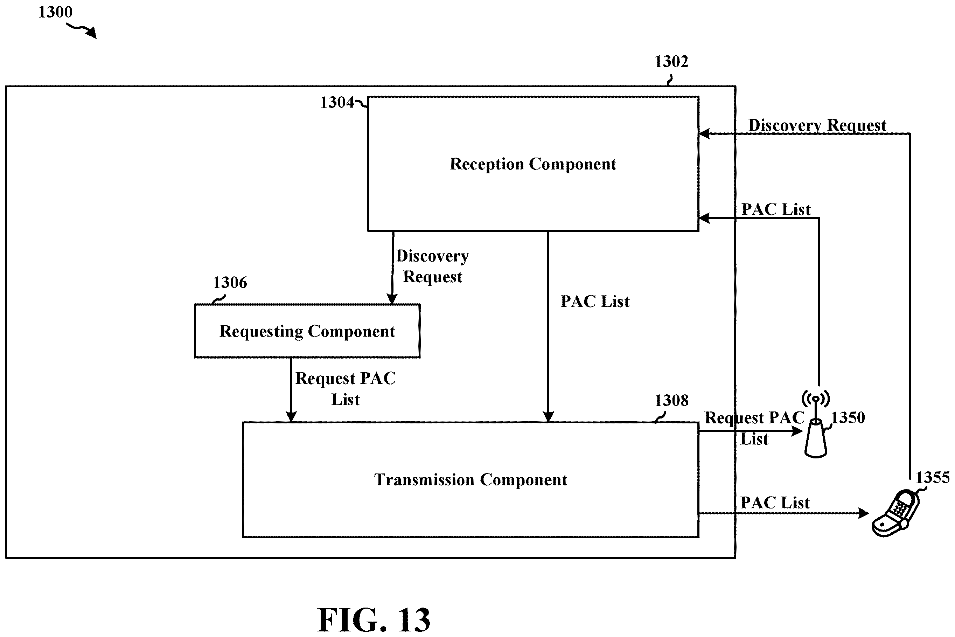

FIG. 13 is a conceptual data flow diagram 1300 illustrating the data flow between different means/components in an exemplary apparatus 1302. The apparatus may be a ProSe Function / network server. The apparatus includes a reception component 1304 that may receive a discovery request from a mobile UE 1355 and/or a PAC list from an eNB 1350. The apparatus also includes a requesting component 1306 that requests the PAC list from the eNB 1350. For example, the PAC list may be requested based on the discovery request received from the mobile UE 1355. The apparatus further includes a transmission component 1308 that may transmit the request for the PAC list to the eNB 1350. In addition, the transmission component 1308 may transmit the PAC list to the mobile UE 1355.

The apparatus may include additional components that perform each of the blocks of the algorithm in the aforementioned flowchart of FIG. 12. As such, each block in the aforementioned flowchart of FIG. 12 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

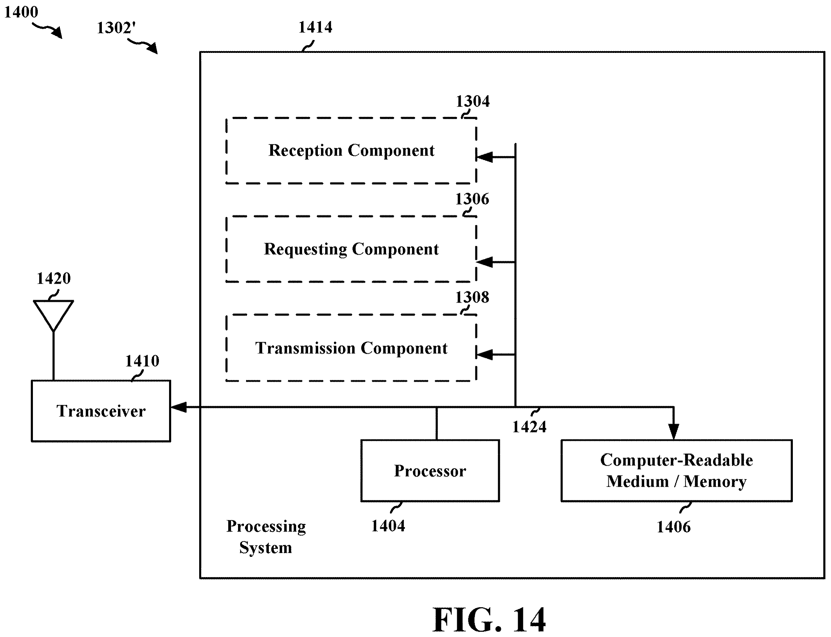

FIG. 14 is a diagram 1400 illustrating an example of a hardware implementation for an apparatus 1302' employing a processing system 1414. The processing system 1414 may be implemented with a bus architecture, represented generally by the bus 1424. The bus 1424 may include any number of interconnecting buses and bridges depending on the specific application of the processing system 1414 and the overall design constraints. The bus 1424 links together various circuits including one or more processors and/or hardware components, represented by the processor 1404, the components 1304, 1306, 1308, and the computer-readable medium / memory 1406. The bus 1424 may also link various other circuits such as timing sources, peripherals, voltage regulators, and power management circuits, which are well known in the art, and therefore, will not be described any further.

The processing system 1414 may be coupled to a transceiver 1410. The transceiver 1410 is coupled to one or more antennas 1420. The transceiver 1410 provides a means for communicating with various other apparatus over a transmission medium. The transceiver 1410 receives a signal from the one or more antennas 1420, extracts information from the received signal, and provides the extracted information to the processing system 1414, specifically the reception component 1304. In addition, the transceiver 1410 receives information from the processing system 1414, specifically the transmission component 1308, and based on the received information, generates a signal to be applied to the one or more antennas 1420. The processing system 1414 includes a processor 1404 coupled to a computer-readable medium / memory 1406. The processor 1404 is responsible for general processing, including the execution of software stored on the computer-readable medium / memory 1406. The software, when executed by the processor 1404, causes the processing system 1414 to perform the various functions described *supra* for any particular apparatus. The computer-readable medium / memory 1406 may also be used for storing data that is manipulated by the processor 1404 when executing software. The processing system 1414 further includes at least one of the components 1304, 1306, 1308. The components may be software components running in the processor 1404, resident/stored in the computer readable medium / memory 1406, one or more hardware components coupled to the processor 1404, or some combination thereof. The processing system 1414 may be a component of the eNB 310 and may include the memory 376 and/or at least one of the TX processor 316, the RX processor 370, and the controller/processor 375.

In one configuration, the apparatus 1302/1302' for wireless communication includes means for means for receiving, from a base station, a list of one or more device-to-device applications transmitted by at least one stationary UE. In another configuration, the apparatus 1302/1302' for wireless communication includes means for receiving, from a mobile UE, a discovery request associated with at least one device-to-device application. In a further configuration, the apparatus 1302/1302' for wireless communication includes means for transmitting, to the mobile UE, a discovery response that includes first information associated with the at least one device-to-device application and second information associated with at least one different device-to-device application. In still another configuration, the apparatus 1302/1302' for wireless communication includes means for requesting the list of the one or more device-to-device applications transmitted by the at least one stationary UE. In an aspect, the one or more device-to-device applications may include at least one advertisement. In another aspect, at least one of the device-to-device applications may be available in a cell of the base station. In a further aspect, at least another one of the device-to-device applications may be available in one or more neighboring cells. In still another aspect, the list may be prioritized based on a directionality associated with the mobile UE. The aforementioned means may be one or more of the aforementioned components of the apparatus 1302 and/or the processing system 1414 of the apparatus 1302' configured to perform the functions recited by the aforementioned means. As described *supra,* the processing system 1414 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

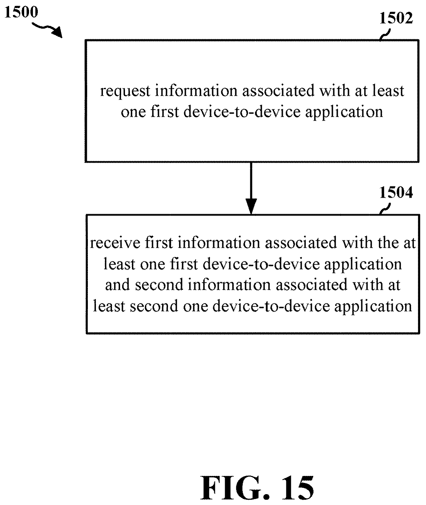

FIG. 15 is a flowchart 1500 of a method of wireless communication. The method may be performed by a UE (e.g., the mobile UE 406, the apparatus 1602/1602').

At 1502, the UE may request information associated with at least one first device-to-device application. For example, referring to FIG. 4, mobile UE 406 may send a discovery request 440 associated with at least one PAC to the network server 404. In an aspect, the mobile UE 406 may request the PAC for the stationary UE 408a but not the PAC for the stationary UE 408b, e.g., when the mobile UE 406 is not aware of the stationary UE 408b.

At 1504, the UE may receive first information associated with the at least one first device-to-device application and second information associated with at least second one device-to-device application. For example, referring to FIG. 4, the network server 404 may transmit a discovery response 450 to the mobile UE 406. In an aspect, the discovery response 450 may include first information associated with the PAC requested (e.g., PAC associated with stationary UE 408a) by the mobile UE 405 and at least one PAC not requested (e.g., PAC associated with stationary UE 408b) by the mobile UE 406.

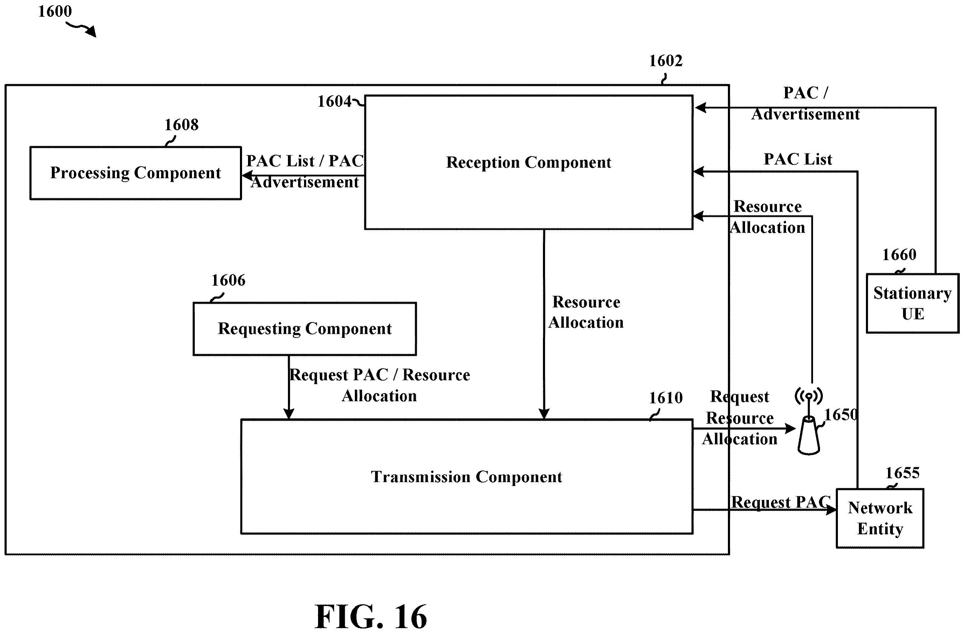

FIG. 16 is a conceptual data flow diagram 1600 illustrating the data flow between different means/components in an exemplary apparatus 1602. The apparatus may be a UE. The apparatus includes a reception component 1604 that receives a PAC list from a network entity 1655 and/or a resource allocation from eNB 1650. In addition, the reception component 1604 may receive a PAC and/or advertisement from the stationary UE 1660. The apparatus also includes a requesting component 1606 that requests at least one PAC associated with a stationary UE and/or a resource allocation. The apparatus additionally includes a processing component 1608 that processes the PAC list to determine any PACs available in the vicinity of the apparatus. In addition, the processing component 1608 may process the PAC and/or advertisement. The apparatus further includes a transmission component 1610 that transmits the request for resource allocation to the eNB 1650 and/or the PAC from the network entity 1655.

The apparatus may include additional components that perform each of the blocks of the algorithm in the aforementioned flowchart of FIG. 15. As such, each block in the aforementioned flowchart of FIG. 15 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

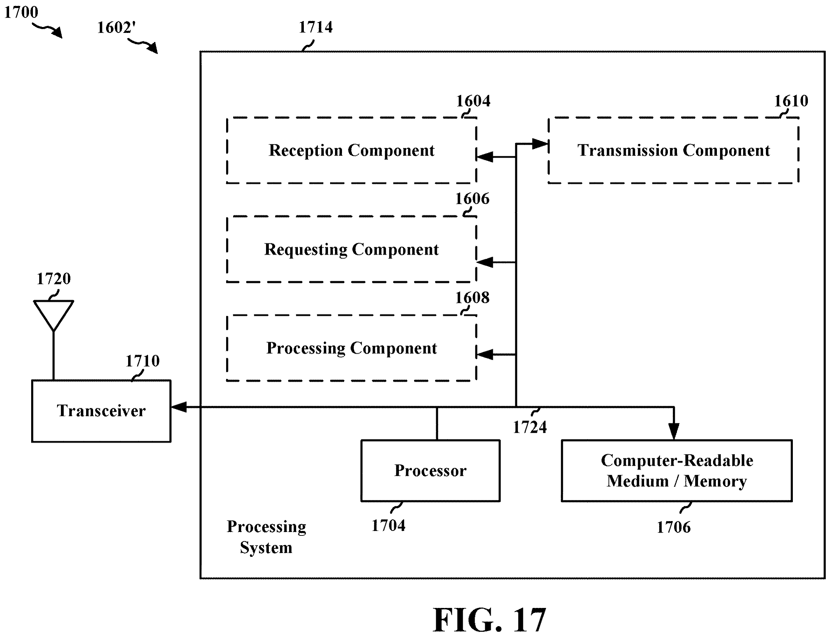

FIG. 17 is a diagram 1700 illustrating an example of a hardware implementation for an apparatus 1602' employing a processing system 1714. The processing system 1714 may be implemented with a bus architecture, represented generally by the bus . The bus 1724 may include any number of interconnecting buses and bridges depending on the specific application of the processing system 1714 and the overall design constraints. The bus 1724 links together various circuits including one or more processors and/or hardware components, represented by the processor 1704, the components 1604, 1606, 1608, 1610 and the computer-readable medium / memory 1706. The bus 1724 may also link various other circuits such as timing sources, peripherals, voltage regulators, and power management circuits, which are well known in the art, and therefore, will not be described any further.

The processing system 1714 may be coupled to a transceiver 1710. The transceiver 1710 is coupled to one or more antennas 1720. The transceiver 1710 provides a means for communicating with various other apparatus over a transmission medium. The transceiver 1710 receives a signal from the one or more antennas 1720, extracts information from the received signal, and provides the extracted information to the processing system 1714, specifically the reception component 1604. In addition, the transceiver 1710 receives information from the processing system 1714, specifically the transmission component 1610, and based on the received information, generates a signal to be applied to the one or more antennas 1720. The processing system 1714 includes a processor 1704 coupled to a computer-readable medium / memory 1706. The processor 1704 is responsible for general processing, including the execution of software stored on the computer-readable medium / memory 1706. The software, when executed by the processor 1704, causes the processing system 1714 to perform the various functions described *supra* for any particular apparatus. The computer-readable medium / memory 1706 may also be used for storing data that is manipulated by the processor 1704 when executing software. The processing system 1714 further includes at least one of the components 1604, 1606, 1608, 1610. The components may be software components running in the processor 1704, resident/stored in the computer readable medium / memory 1706, one or more hardware components coupled to the processor 1704, or some combination thereof. The processing system 1714 may be a component of the LTE 350 and may include the memory 360 and/or at least one of the TX processor 368, the RX processor 356, and the controller/processor 359.

In one configuration, the apparatus 1602/1602' for wireless communication includes means for requesting information associated with at least one first device-to-device application. In another configuration, the apparatus 1602/1602' for wireless communication includes means for receiving first information associated with the at least one first device-to-device application and second information associated with at least second one device-to-device application. In an aspect, the second information may be received without sending a request. In another aspect, requesting is configured to request one or more resources for device-to-device communications. The aforementioned means may be one or more of the aforementioned components of the apparatus 1602 and/or the processing system 1714 of the apparatus 1602' configured to perform the functions recited by the aforementioned means. As described *supra,* the processing system 1714 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method (1200) for wireless communication at a network entity, comprising:
receiving (1204), from a base station, a list of one or more device-to-device applications transmitted by at least one stationary user equipment, UE, wherein the list is prioritized based on a directionality associated with a mobile UE;
receiving (1206), from the mobile UE, a discovery request associated with at least one device-to-device application; and
transmitting (1208), to the mobile UE, a discovery response that includes first information associated with the at least one device-to-device application and second information associated with at least one different device-to-device application.

2. The method of claim 1, further comprising:
requesting the list of the one or more device-to-device applications transmitted by the at least one stationary UE.

3. The method of claim 1, wherein the one or more device-to-device applications include at least one advertisement.

4. The method of claim 1, wherein at least one of the one or more device-to-device applications are available in a cell of the base station, wherein at least another one of the one or more device-to-device applications are available in one or more neighboring cells.

5. An apparatus (1302) for wireless communication at a network entity, comprising:
means (1304) for receiving, from a base station (1350), a list of one or more device-to-device applications transmitted by at least one stationary user equipment, UE, wherein the list is prioritized based on a directionality associated with a mobile UE;
means (1304) for receiving, from the mobile UE (1355), a discovery request associated with at least one device-to-device application; and
means (1308) for transmitting, to the mobile UE (1355), a discovery response that includes first information associated with the at least one device-to-device application and second information associated with at least one different device-to-device application.

6. The apparatus of claim 5, further comprising:
means for requesting the list of the one or more device-to-device applications transmitted by the at least one stationary UE.

7. The apparatus of claim 5, wherein the one or more device-to-device applications include at least one advertisement.

8. The apparatus of claim 5, wherein at least one of the one or more device-to-device applications are available in a cell of the base station, wherein at least another one of the one or more device-to-device applications are available in one or more neighboring cells.

9. A computer program comprising instructions which, when executed on at least one processor of an apparatus for wireless communication, cause said apparatus to carry out the method according to any of claims 1 to 4.

## Patentansprüche

1. Verfahren (1200) für drahtlose Kommunikation bei einer Netzwerkentität, umfassend:
Empfangen (1204), von einer Basisstation, einer Liste von einer oder mehreren Gerät-zu-Gerät-Anwendungen, die von mindestens einer stationären Benutzervorrichtung, UE, übertragen werden, wobei die Liste auf der Grundlage einer einem mobilen UE zugeordneten Richtungsabhängigkeit priorisiert wird;
Empfangen (1206) einer Erkennungsanforderung von der mobilen UE, die mit mindestens einer Gerät-zu-Gerät-Anwendung verbunden ist; und
Übertragen (1208) einer Erkennungsantwort an die mobile UE, die erste Informationen, die mit der mindestens einen Gerät-zu-Gerät-Anwendung verbunden sind, und zweite Informationen, die mit mindestens einer anderen Gerät-zu-Gerät-Anwendung verbunden sind, enthält.

2. Verfahren nach Anspruch 1, ferner umfassend:
Anfordern der Liste der einen oder mehreren Gerät-zu-Gerät-Anwendungen, die von der mindestens einen stationären UE übertragen werden.

3. Verfahren nach Anspruch 1, wobei die eine oder die mehreren Gerät-zu-Gerät-Anwendungen mindestens eine Werbung enthalten.

4. Verfahren nach Anspruch 1, wobei mindestens eine der einen oder mehreren Gerät-zu-Gerät-Anwendungen in einer Zelle der Basisstation verfügbar ist, wobei mindestens eine andere der einen oder mehreren Gerät-zu-Gerät-Anwendungen in einer oder mehreren benachbarten Zellen verfügbar ist.

5. Vorrichtung (1302) für die drahtlose Kommunikation an einer Netzinstanz, umfassend:
Mittel (1304) zum Empfangen, von einer Basisstation (1350), einer Liste von einer oder mehreren Gerät-zu-Gerät-Anwendungen, die von mindestens einer stationären Benutzergerät, UE, übertragen werden, wobei die Liste auf der Grundlage einer einem mobilen UE zugeordneten Richtungsabhängigkeit priorisiert ist;
Mittel (1304) zum Empfangen einer Erkennungsanforderung, die mit mindestens einer Gerät-zu-Gerät-Anwendung verbunden ist, von der mobilen UE (1355); und
Mittel (1308) zum Übertragen einer Erkennungsantwort an die mobile UE (1355), die erste Informationen, die mit der mindestens einen Gerät-zu-Gerät-Anwendung verbunden sind, und zweite Informationen, die mit mindestens einer anderen Gerät-zu-Gerät-Anwendung verbunden sind, enthält.

6. Vorrichtung nach Anspruch 5, die ferner Folgendes aufweist:
Mittel zum Anfordern der Liste der einen oder mehreren Gerät-zu-Gerät-Anwendungen, die von der mindestens einen stationären UE übertragen werden.

7. Vorrichtung nach Anspruch 5, wobei die eine oder die mehreren Gerät-zu-Gerät-Anwendungen mindestens eine Werbung enthalten.

8. Vorrichtung nach Anspruch 5, wobei mindestens eine der einen oder mehreren Gerät-zu-Gerät-Anwendungen in einer Zelle der Basisstation verfügbar ist, wobei mindestens eine andere der einen oder mehreren Gerät-zu-Gerät-Anwendungen in einer oder mehreren benachbarten Zellen verfügbar ist.

9. Computerprogramm mit Befehlen, die, wenn sie auf mindestens einem Prozessor einer Vorrichtung für drahtlose Kommunikation ausgeführt werden, die Vorrichtung veranlassen, das Verfahren nach einem der Ansprüche 1 bis 4 auszuführen.

## Revendications

1. Un procédé (1200) de communication sans fil au niveau d'une entité de réseau, comprenant :
la réception (1204), à partir d'une station de base, d'une liste d'une ou plusieurs applications de dispositif à dispositif transmises par au moins un équipement utilisateur, UE, fixe, dans lequel la liste est priorisée sur la base d'une directivité associée à un UE mobile ;
la réception (1206), à partir de l'UE mobile, d'une requête de découverte associée à au moins une application de dispositif à dispositif ; et
la transmission (1208), à partir de l'UE mobile, d'une réponse de découverte qui comporte une première information associée à l'au moins une application de dispositif à dispositif et une deuxième information associée à au moins une application de dispositif à dispositif différente.

2. Le procédé selon la revendication 1, comprenant en outre :
la requête de la liste des une ou plusieurs applications de dispositif à dispositif transmises par l'au moins un UE fixe.

3. Le procédé selon la revendication 1, dans lequel les une ou plusieurs applications de dispositif à dispositif comportent au moins une annonce.

4. Le procédé selon la revendication 1, dans lequel au moins une des une ou plusieurs applications de dispositif à dispositif sont disponibles dans une cellule de la station de base, dans lequel au moins une autre des une ou plusieurs applications de dispositif à dispositif est disponible dans une ou plusieurs cellules voisines.

5. Un appareil (1302) de communication sans fil au niveau d'une entité de réseau, comprenant :
un moyen (1304) pour recevoir, à partir d'une station de base (1350), une liste d'une ou plusieurs applications de dispositif à dispositif transmises par au moins un équipement utilisateur, UE, fixe, dans lequel la liste est priorisée sur la base d'une directivité associée à un UE mobile ;
un moyen (1304) pour recevoir, à partir de l'UE mobile (1355), une requête de découverte associée à au moins une application de dispositif à dispositif ; et
un moyen (1308) pour transmettre, à partir de l'UE mobile (1355), une réponse de découverte qui comporte une première information associée à l'au moins une application de dispositif à dispositif et une deuxième information associée à au moins une application de dispositif à dispositif différente.

6. L'appareil selon la revendication 5, comprenant en outre :
un moyen pour requérir la liste des une ou plusieurs applications de dispositif à dispositif transmises par l'au moins un UE fixe.

7. L'appareil selon la revendication 5, dans lequel les une ou plusieurs applications de dispositif à dispositif comportent au moins une annonce.

8. L'appareil selon la revendication 5, dans lequel au moins une des une ou plusieurs applications de dispositif à dispositif sont disponibles dans une cellule de la station de base, dans lequel au moins une autre des une ou plusieurs applications de dispositif à dispositif est disponible dans une ou plusieurs cellules voisines.

9. Un programme de calculateur comprenant des instructions qui, quand elles sont exécutées sur au moins un processeur d'un appareil de communication sans fil, amènent ledit appareil à mettre en œuvre le procédé selon l'une des revendications 1 à 4.
